# EUROPEAN PATENT APPLICATION

(11) **EP 1 602 276 A1**
(43) Date of publication of application: **07.12.2005**
(21) Application number: 05252813.0
(22) Date of filing: 07.05.2005
(51) Int. Cl.: A01N 3/00, A01N 25/22, A01N 27/00

(54) **Compositions with cyclopropenes and adjuvants**

(30) Priority: 19.05.2004 US 572743 P
(71) Applicant: ROHM AND HAAS COMPANY, Philadelphia, Pennsylvania 19106-2399 (US)
(72) Inventor: Basel, Richard M., Phio 44830 (US); Kostansek, Edward Charles, P.O: Box 337 Pennsylvania 18912 (US); Stevens, Bridget Marie, Pennsylvania 19044 (US)
(74) Representative: Buckley, Guy Julian

(57) **Abstract**

A composition is provided that contains one or more molecular encapsulation agents within each of which is encapsulated one or more cyclopropenes and that contains one or more adjuvants selected from the group consisting of surfactants, alcohols, hydrocarbon oils, and mixtures thereof. Also provided is a method that includes the step of contacting such compositions to one or more plants or plant parts.

## Description

### BACKGROUND:

Ethylene can cause the premature death of plants or plant parts including, for example, flowers, leaves, fruits, and vegetables through binding with certain receptors in the plant. Ethylene also promotes leaf yellowing and stunted growth as well as premature fruit, flower, and leaf drop. Cyclopropenes (i.e., substituted and unsubstituted cyclopropene and its derivatives) are effective agents for blocking the effects of ethylene. One difficulty in effectively contacting a plant or plant part with cyclopropenes is that many useful cyclopropenes are gasses at ambient conditions (10 to 35°C and approximately 1 atmosphere pressure); thus, in some cases, the cyclopropene tends to escape into the atmosphere instead of remaining in contact with the plant or plant part (either on the surface or in the interior or the plant or plant part). US 5,518,988 discloses applying mixtures of cyclopropenes and wetting agents to plants. It is desired to provide compositions that can be contacted with plants or plant parts and that have improved the effectiveness of cyclopropenes at blocking the effects of ethylene.

### STATEMENT OF THE INVENTION:

In the present invention, there is provided a composition comprising
(a) one or more molecular encapsulation agents within each of which is encapsulated one or more cyclopropenes of the formula 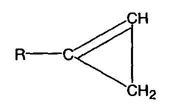 wherein said R is hydrogen or a substituted or unsubstituted alkyl, alkenyl, alkynyl, cycloalkyl, cycloalkylalkyl, phenyl, or naphthyl group; wherein the substituents, when present, are independently halogen, alkoxy, or substituted or unsubstituted phenoxy; and
(b) one or more adjuvants selected from the group consisting of surfactants, alcohols, hydrocarbon oils, and mixtures thereof.

### DETAILED DESCRIPTION:

As used herein, all percentages are percent by weight and all parts are parts by weight, unless otherwise specified, and are inclusive and combinable. All ratios are by weight and all ratio ranges are inclusive and combinable. All molar ranges are inclusive and combinable.

As used herein, the term "alkyl" means straight chain, branched chain , or cyclic (C₁-C₂₀) radicals which include, for example, methyl, ethyl, n-propyl, isopropyl, 1-ethylpropyl, n-butyl, tert-butyl, isobutyl, 2,2-dimethylpropyl, pentyl, octyl, and decyl. The terms "alkenyl" and "alkynyl" mean (C₃-C₂₀) alkenyl and (C₃-C₂₀) alkynyl groups such as, for example, 2-propenyl, 2-butenyl, 3-butenyl, 2-methyl-2-propenyl, and 2-propynyl. The term "cycloalkylalkyl" means a (C₁-C₁₅) alkyl group substituted with a (C₃-C₇) cycloalkyl group such as, for example cyclopropylmethyl, cyclopropylethyl, cyclobutylmethyl, and cyclopentylethyl. The term "haloalkyl" means an alkyl radical wherein one or more of the hydrogen atoms have been replaced by a halogen atom. The term "halogen" means one or more of fluorine, chlorine, bromine, and iodine.

The practice of the present invention involves the use of one or more cyclopropenes. As used herein, "cyclopropene" means any compound with the formula 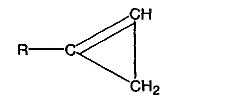 where R is hydrogen or a substituted or unsubstituted alkyl, alkenyl, alkynyl, cycloalkyl, cycloalkylalkyl, phenyl, or naphthyl group; wherein the substituents, when present, are independently halogen, alkoxy, or substituted or unsubstituted phenoxy. As used herein, when the compound of the above structure when R is a hydrogen is meant, the phrase "unsubstituted cyclopropene" will be used.

In some embodiments, R has no double bond. Independently, in some embodiments, R has no triple bond. Independently, in some embodiments, there is no halogen atom substituent on R. Independently, in some embodiments, R has no substituents that are ionic. Independently, in some embodiments, R is not capable of generating oxygen compounds.

In some embodiments of the invention, R is (C₁-C₁₀) alkyl. In some embodiments, R is (C₁-C₈) alkyl, or (C₁-C₄) alkyl, or methyl. When R is methyl, the cyclopropene is known herein as "1-MCP."

The cyclopropenes applicable to this invention are known materials, which may be prepared by any method. Some suitable methods of preparation of cyclopropenes are the processes disclosed in U. S. Patents No. 5,518,988 and 6,017,849.

The amount of cyclopropene in compositions of the present invention may vary widely, depending on the type of composition and the intended method of use. In some embodiments, the amount of cyclopropene, based on the total weight of the composition, is 4% by weight or less; or 1% by weight or less; or 0.5% by weight or less; or 0.05% by weight or less. Independently, in some embodiments, the amount of cyclopropene, based on the total weight of the composition, is 0.000001% by weight or more; or 0.00001% by weight or more; or 0.0001% by weight or more; or 0.001% by weight or more.

In compositions of the present invention that include water, the amount of cyclopropene may be characterized as parts per million (i.e., parts by weight of cyclopropene per 1,000,000 parts by weight of water, "ppm") or as parts per billion (i.e., parts by weight of cyclopropene per 1,000,000,000 parts by weight of water, "ppb"). In some embodiments, the amount of cyclopropene is 1 ppb or more; or 10 ppb or more; or 100 ppb or more. Independently, in some embodiments, the amount of cyclopropene is 10,000 ppm or less; or 1,000 ppm or less.

In some embodiments, the practice of the present invention involves the use of one or more metal-complexing agents. A metal-complexing agent is a compound that contains one or more electron-donor atoms capable of forming coordinate bonds with a metal atoms. Some metal-complexing agents are chelating agents. As used herein, a "chelating agent" is a compound that contains two or more electron-donor atoms that are capable of forming coordinate bonds with a metal atom, and a single molecule of the chelating agent is capable of forming two or more coordinate bonds with a single metal atom. Suitable chelating agents include, for example, organic and inorganic chelating agents. Among the suitable inorganic chelating agents are, for example, phosphates such as, for example, tetrasodium pyrophosphate, sodium tripolyphosphate, and hexametaphosphoric acid. Among the suitable organic chelating agents are those with macrocyclic structures and non-macrocyclic structures. Among the suitable macrocyclic organic chelating agents are, for example, porphine compounds, cyclic polyethers (also called crown ethers), and macrocyclic compounds with both nitrogen and oxygen atoms.

Some suitable organic chelating agents that have non-macrocyclic structures are, for example, aminocarboxylic acids, 1,3-diketones, hydroxycarboxylic acids, polyamines, aminoalcohols, aromatic heterocyclic bases, phenol, aminophenols, oximes, Shiff bases, sulfur compounds, and mixtures thereof. In some embodiments, the chelating agent includes one or more aminocarboxylic acids, one or more hydroxycarboxylic acids, one or more oximes, or a mixture thereof. Some suitable aminocarboxylic acids include, for example, ethylenediaminetetraacetic acid (EDTA), hydroxyethylethylenediaminetriacetic acid (HEDTA), nitrilotriacetic acid (NTA), N-dihydroxyethylglycine (2-HxG), ethylenebis(hydroxyphenylglycine) (EHPG), and mixtures thereof. Some suitable hydroxycarboxylic acids include, for example, tartaric acid, citric acid, gluconic acid, 5-sulfoslicylic acid, and mixtures thereof. Some suitable oximes include, for example, dimethylglyoxime, salicylaldoxime, and mixtures thereof. In some embodiments, EDTA is used.

Some additional suitable chelating agents are polymeric. Some suitable polymeric chelating agents include, for example, polyethyleneimines, polymethacryloylacetones, poly(acrylic acid), and poly(methacrylic acid). Poly(acrylic acid) is used in some embodiments.

Some suitable metal-complexing agents that are not chelating agents are, for example, alkaline carbonates, such as, for example, sodium carbonate.

Metal-complexing agents may be present in neutral form or in the form of one or more salts. Mixtures of suitable metal-complexing agents are also suitable.

Also contemplated are embodiments of the present invention in which no metal-complexing agent is used.

Some embodiments of the present invention do not contain water.

In some embodiments, the composition of the present invention does contain water; in some of such embodiments, the water contains one or more metal ions, such as, for example, iron ions, copper ions, other metal ions, or mixtures thereof. In some embodiments, the water contains 0.1 ppm or more of one or more metal ions.

Among embodiments that use one or more metal-complexing agents, the amount of metal-complexing agent used in the present invention also may vary widely. In some embodiments, the amount of metal-complexing agent will be adjusted to be sufficient to complex the amount of metal ion that is present or expected to be present in those embodiments. For example, in some embodiments in which the composition of the present invention includes water, if a relatively efficient chelating agent is used (i.e., a chelating agent that will form a complex with all or nearly all the metal ions in the water), the ratio of moles of chelating agent to moles of metal ion will be 0.1 or greater; or 0.2 or greater; or 0.5 or greater; or 0.8 or greater. Among such embodiments that use a relatively efficient chelating agent, the ratio of moles of chelating agent to moles of metal ion will be 2 or less; or 1.5 or less; or 1.1 or less.

Independently, in some embodiments, the amount of metal-complexing agent is, based on the total weight of the composition, 25% by weight or less; or 10% by weight or less; or 1% by weight or less. Independently, in some embodiments, the amount of metal-complexing agent is, based on the total weight of the composition, 0.00001% or more; or 0.0001% or more; or 0.01% or more.

Independently, in some embodiments in which the composition of the present invention includes water, the amount of metal-complexing agent can usefully be determined by the molar concentration of metal-complexing agent in the water. In some embodiments, the concentration of metal-complexing agent is 0.00001 mM (i.e., milli-Molar) or greater; or 0.0001 mM or greater; or 0.001 mM or greater; or 0.01 mM or greater; or 0.1 mM or greater. Independently, in some embodiments in which the composition of the present invention includes water, the concentration of metal-complexing agent is 100 mM or less; or 10 mM or less; or 1 mM or less.

The composition of the present invention includes at least one molecular encapsulating agent. Useful molecular encapsulating agents include, for example, organic and inorganic molecular encapsulating agents. Suitable organic molecular encapsulating agents include, for example, substituted cyclodextrins, unsubstituted cyclodextrins, and crown ethers. Suitable inorganic molecular encapsulating agents include, for example, zeolites. Mixtures of suitable molecular encapsulating agents are also suitable. In some embodiments of the invention, the encapsulating agent is α-cyclodextrin ("α-CD"), β-cyclodextrin, γ-cyclodextrin, or a mixture thereof. In another embodiment of the invention, particularly when the cyclopropene is 1-methylcyclopropene, the encapsulating agent is α-cyclodextrin. The preferred encapsulating agent will vary depending upon the size of the R group. However, as one skilled in the art will appreciate, any cyclodextrin or mixture of cyclodextrins, cyclodextrin polymers, modified cyclodextrins, or mixtures thereof can also be utilized pursuant to the present invention. Cyclodextrins are available from Wacker Biochem Inc., Adrian, MI or Cerestar USA, Hammond, IN, as well as other vendors.

The composition of the present invention includes at least one molecular encapsulating agent that encapsulates one or more cyclopropenes. A cyclopropene or substituted cyclopropene molecule encapsulated in a molecule of a molecular encapsulating agent is known herein as a "cyclopropene molecular encapsulating agent complex." The cyclopropene molecular encapsulation agent complexes can be prepared by any means. In one method of preparation, for example, such complexes are prepared by contacting the cyclopropene with a solution or slurry of the molecular encapsulation agent and then isolating the complex, again using general processes disclosed in U. S. Patent No. 6,017,849. In the case of 1-MCP, the 1-MCP gas is bubbled through a solution of α-cyclodextrin in water, from which the complex first precipitates and is then isolated by filtration.

In some embodiments, the amount of molecular encapsulating agent can usefully be characterized by the ratio of moles of molecular encapsulating agent to moles of cyclopropene. In some embodiments, the ratio of moles of molecular encapsulating agent to moles of cyclopropene is 0.1 or larger; or 0.2 or larger; or 0.5 or larger; or 0.9 or larger. Independently, in some of such embodiments, the ratio of moles of molecular encapsulating agent to moles of cyclopropene is 2 or lower; or 1.5 or lower.

In some embodiments of the present invention, one or more surfactants are used. Suitable surfactants include, for example, anionic surfactants, cationic surfactants, nonionic surfactants, amphoteric surfactants, and mixtures thereof.

One group of suitable anionic surfactants are the sulfosuccinates, including, for example, alkaline salts of mono- and dialkyl sulfosuccinates. In some embodiments, sodium salts of dialkyl sulfosuccinates are used, including, for example, those with alkyl groups with 4 carbons or more, or 6 carbons or more. In some embodiments, sodium salts of dialkyl sulfosuccinates are used, including, for example, those with alkyl groups with 18 carbons or fewer; or 14 carbons or fewer; or 10 carbons or fewer.

Another group of suitable anionic surfactants are the sulfates and sulfonates, including, for example, alkaline salts of alkyl sulfates. In some embodiments, sodium salts of alkyl sulfates are used, including, for example, those with alkyl groups with 4 carbons or more, or 6 carbons or more, or 8 carbons or more. In some embodiments, sodium salts of alkyl sulfates are used, including, for example, those with alkyl groups with 18 carbons or fewer; or 14 carbons or fewer; or 10 carbons or fewer.

Some suitable surfactants are, for example, sodium di-octyl sulfosuccinate, sodium di-hexyl sulfosuccinate, sodium dodecyl sulfate, alkylphenol ethoxylates (such as, for example, Triton™ X-100 from Dow), cetyl pyridinium bromide, and silicone-based surfactants (such as, for example, Silwet™ L-77 surfactant from OSi Specialties).

Mixtures of suitable surfactants are also suitable.

Suitable surfactants have various properties. For example, some are excellent at enabling cyclopropene to remain in contact with certain plants or plant parts; some are readily soluble in the other ingredients of the formulation; some do not cause phytotoxicity in plants or plant parts. Very few surfactants excel in every property, but the practitioner will readily be able to choose a surfactant or mixture of surfactants with the balance of properties most appropriate for the desired use, taking into account, for example, the species desired to be treated and the other ingredients intended to be used in the composition.

Among embodiments that use surfactant, some embodiments use surfactant in amounts, by weight based on the total weight of the composition, of 0.025% or more; or 0.05% or more; or 0.1% or more. Independently, among embodiments that use surfactant, some embodiments use surfactant in amounts, by weight based on the total weight of the composition, of 75% or less; or 50% or less; or 20% or less; or 5% or less; or 2% or less; 1% or less; or 0.5% or less; or 0.3% or less.

In some embodiments of the present invention, one or more hydrocarbon oils are used. Hydrocarbon oils are straight, branched, or cyclic alkane compounds with 6 or more carbon atoms. In some embodiments, hydrocarbon oils are obtained from petroleum distillation and contain a mixture of alkane compounds, along with, in some cases, impurities. In some embodiments, hydrocarbon oils are used that contain 6 or more carbon atoms. In some embodiments, hydrocarbon oils are used that contain 18 or fewer carbon atoms. Some suitable hydrocarbon oils include, for example, hexane, decane, dodecane, hexadecane, diesel oil, refined paraffinic oil (e.g., Ultrafine™ spray oil from Sun Company), and mixtures thereof.

Among embodiments that use hydrocarbon oil, some embodiments use hydrocarbon oil in amounts, by weight based on the total weight of the composition, of 0.25% or more; or 0.5% or more; or 1% or more. Independently, among embodiments that use hydrocarbon oil, some embodiments use hydrocarbon oil in amounts, by weight based on the total weight of the composition, of 90% or less; or 50% or less; or 10% or less; or 5% or less; or 4% or less; or 3% or less.

Some embodiments of the present invention involve the use of one or more alcohols. The suitable alcohols include, for example, alkyl alcohols and other alcohols. As used herein, alkyl alcohols are alkyl compounds with one hydroxyl group; the alkyl group may be linear, branched, cyclic, or a combination thereof; the alcohol may be primary, secondary, or tertiary. In the present invention, alkyl alcohols are used which have alkyl groups with 2 or more carbon atoms. In some embodiments, ethanol, isopropanol, or a mixture thereof are used. In some embodiments, alkyl alcohols are used which have alkyl groups with 20 or fewer carbon atoms; or 10 or fewer carbon atoms; or 6 or fewer carbon atoms; or 3 or fewer carbon atoms.

Among embodiments that use alcohols, some embodiments use alcohol in amounts, by weight based on the total weight of the composition, of 0.25% or higher; or 0.5% or higher, or 1% or higher. Among embodiments that use alcohols, some embodiments use alcohol in amounts, by weight based on the total weight of the composition, of 90% or less; or 50% or less; or 10% or less; or 5% or less; or 4% or less; or 3% or less.

The adjuvants listed above may be used alone or in any combination. Various embodiments are contemplated that include the use of, for example, the following compositions: compositions that contain one or more surfactant but no hydrocarbon oil and no alcohol; compositions that contain one or more hydrocarbon oil but no surfactant and no alcohol; and compositions that contain one or more alcohol but no surfactant and no hydrocarbon oil. In some embodiments, compositions are used that contain one or more surfactant and one or more hydrocarbon oil; or compositions are used that contain one or more surfactant and one or more alcohol. In some embodiments, compositions are used that contain one or more surfactant, one or more hydrocarbon oil, and one or more alcohol.

It is sometimes desirable to include in the composition one or more adjuvants, in addition to surfactants, alcohols, and hydrocarbon oils. Such additional adjuvants include, for example, extenders, pigments, fillers, binders, plasticizers, lubricants, wetting agents, spreading agents, dispersing agents, stickers, adhesives, defoamers, thickeners, transport agents, and emulsifying agents. Some of such adjuvants commonly used in the art can be found in the John W. McCutcheon, Inc. publication *Detergents and Emulsifiers, Annual*, Allured Publishing Company, Ridgewood, New Jersey, U.S.A..

One useful method of assessing the usefulness of compositions is the activity of the composition. As used herein, "activity" of a cyclopropene means the concentration of pure cyclopropene that is available to be used. For example, in general, if a reagent is mixed with a composition containing cyclopropene, and that reagent reacts with some or all of the cyclopropene, or that reagent complexes with some or all of the cyclopropene in a way that makes some or all of the cyclopropene undetectable or unavailable for useful purposes, that reagent is said to reduce the activity of the cyclopropene. One method of measuring the activity of a composition of the present invention is by testing the effectiveness of the composition in treating plants, using methods, for example, like the tomato epinasty test defined herein below.

The ingredients of the present invention may be admixed by any means, in any order.

In some embodiments, a first pack is assembled that contains one or more cyclopropene molecular encapsulating agent complexes, and a second pack is assembled that contains one or more adjuvants. Before the composition is intended to be used, the two packs are admixed with each other and with water. In some of such embodiments, one or more metal-complexing agent is admixed with at least one of the first pack, the second pack, or the water.

In some embodiments, all the ingredients, including one or more cyclopropene molecular encapsulating agent complexes, one or more adjuvants, and, optionally, one or more metal-complexing agent, are admixed with water, and the complete admixture is stored until it is desired to use the composition. It is contemplated that such embodiments are most useful when the molecular encapsulating agent is relatively dilute.

In some embodiments, a non-aqueous concentrate is made by admixing one or more cyclopropene molecular encapsulating agent complex, and one or more adjuvants. It is contemplated that, before it is intended to use the composition, the non-aqueous concentrate could be admixed with water. Among such embodiments are some embodiments in which one or more metal-complexing agent is admixed with the non-aqueous concentrate or with the water or with both.

Also contemplated are embodiments in which water is not included in the composition. In such embodiments, one or more cyclopropene molecular encapsulating agent complex and one or more adjuvants are admixed, optionally with additional adjuvants, to form a composition that can be used without admixing with water.

In some embodiments, a composition of the present invention is used to treat plants or plant parts. Plant parts include any part of a plant, including, for example, flowers, blooms, seeds, cuttings, roots, bulbs, fruits, vegetables, leaves, and combinations thereof. In some embodiments, a composition of the present invention is used to treat one or more of blooms, fruits, and vegetables.

Such treatment may be conducted by any method that allows cyclopropene to contact the plants or plant parts. Some examples of methods of contact are, for example, spraying, foaming, fogging, pouring, brushing, dipping, similar methods, and combinations thereof. In some embodiments, spraying or dipping or both is used.

### EXAMPLES

In the examples herein below, those marked with "(C)" are comparative examples.

### Tomato Epinasty Test Procedure:

Tomato epinasty tests were performed as follows:

Tomatoes (Rutgers 39 Variety Harris Seeds No 885 Lot 37729-A3) were grown in 2 ½" square pots filled with a commercial potting mix. Two seeds were place in each pot. Plants that had expanded first true leaves and were between 3 and 5 inches high were used for the tomato epinasty test.

To conduct the assay, the plants were sprayed to run off with the test 1- MCP foliar spray and allowed to dry for 4 hours in sunlight These operations were performed in a ventilated area away from the plants growing in the greenhouse so there would not be any unintended treatment to growing plants destined for later experiments.

The 1-MCP treated plants and both treated and untreated controls were placed into an SLX controlled-atmosphere shipping box and sealed. To the box, ethylene was injected through a septum, which gave a concentration of 14 ppm. The plants were held sealed for 12-14 hours in the dark with ethylene in the atmosphere. At the end of ethylene treatment, the box was opened and scored for epinasty. Scoring for epinasty was accomplished by using the following scoring system for each pot.
1. 0% no epinasty (100% control)
2. 20% A couple leaves show some drooping (80% control)
3. 50% Plants show 50% of full response. Not all leaves need to show effect. (50% control)
4. 80% Almost all leaves drooping and some show underside of leaf exposed on top. (20% control)
5. 100% Leaves completely drooping and the underside of the leaf exposed from above. (0% control)

The score of each pot is recorded. The average of 6 or 8 pots is averaged to get a score. The percentage improvement is calculated by interpolating the percentage improvement from the control water (i.e., no additives) 1-MCP treatment.

Tomato epinasty tests were conducted using a formulation that included water, a 1-MCP α-CD complex, and sodium salt of EDTA. The 1-MCP α-CD complex contained 0.14% 1-MCP based on the weight of the 1-MCP α-CD complex; the amount of the 1-MCP α-CD complex was adjusted to give the amount of 1-MCP shown in each example below. The amount of sodium salt of EDTA in each formulation was 100 ppm. In some formulations, further ingredients were included, as described in the examples below.

### Example 1

Formulations were made as described in the procedure for the tomato epinasty test shown herein above, but with no adjuvants, using the amount of 1-MCP α-CD complex necessary to achieve the concentrations of 1-MCP shown. Results were as follows:

| **Concentration of 1-MCP (ppb)** | **% Control of Epinasty** |
|---|---|
| 0 (C) | 0-5 |
| 70 (C) | 10 |
| 140 (C) | 15 |
| 280 (C) | 35 |
| 1400 (C) | 85 |

Significant control of epinasty can be achieved without adjuvants, but only at relatively high concentrations of 1-MCP.

### Example 2: Effect of Surfactant at 140 ppb 1-MCP:

Formulations were made as in Example 1, with various surfactants included in the composition at 1% by weight based on the total weight of the composition. Results were as follows:

| **Surfactant** | **% Control of Epinasty** |
|---|---|
| Tween™ 80⁽¹⁾ | 10 |
| Tween™ 60⁽¹⁾ | 20 |
| Triton™ X-45⁽²⁾ | 20 |
| sodium dodecylsulfate (SDS) | 30 |
| sodium dioctylsulfosuccinate (DOSS) | 30 |
| Sylwet™ L-77 | 40⁽³⁾ |
| Triton™ X-100⁽²⁾ | 60 |
| cetyl pyridinium bromide | 60⁽³⁾ |

| | |
|---|---|
| note (1): Polyoxyethylenesorbitan monooleate from ICI Americas, Inc. | |
| note (2): Octylphenol ethoxylate from Dow | |
| note (3): phytotoxic to tomatoes | |

Most of the surfactants improved the control of epinasty over the comparable result from Example 1 (140 ppb 1-MCP, no adjuvant) of 15%.

### Example 3: Various Alcohols and (Comparative) Acetone at 140 ppb 1-MCP:

Formulations were made as in Example 1, with various alcohols (and comparatives) included in the composition at 1 % by weight based on the total weight of the composition. Results were as follows:

| **Additive** | **% Control of Epinasty** |
|---|---|
| methanol (C) | 0 |
| acetone (C) | 0 |
| ethanol | 30 |
| isopropanol | 30 |

Ethanol and isopropanol improved the control of epinasty over the comparable result from Example 1 (140 ppb 1-MCP, no adjuvant) of 15%.

### Example 4: Surfactant Plus Alkyl Alcohol with 140 ppb 1-MCP:

Formulations were made as in Example 1, with various alcohols (and comparatives). In all compositions of Example 3, SDS was included in the composition at 1% by weight based on the total weight of the composition. Results were as follows:

| **Solvent** | **Concentration of Alcohol**⁽⁴⁾ | **% Control of Epinasty** |
|---|---|---|
| methanol (C) | 1 | 20 |
| acetone (C) | 1 | 20 |
| ethanol | 1 | 40 |
| ethanol | 2 | 60 |
| isopropanol | 1 | 60 |
| isopropanol | 2 | 90 |

| | | |
|---|---|---|
| note (4): % by weight, based on the total weight of the composition | | |

Ethanol and isopropanol improved the control of epinasty over the comparative examples.

### Example 5: Surfactant Plus Oil with 140 ppb 1-MCP:

Formulations were made as in Example 1, with various hydrocarbon oils, all used at 1% by weight based on the weight of the total composition. In all compositions of Example 3, SDS was included in the composition at 1% by weight based on the total weight of the composition. Results were as follows:

| **Oil** | **% Control of Epinasty** |
|---|---|
| mineral oil | 20 |
| hexane | 40 |
| decane | 40 |
| dodecane | 40 |
| hexadecane | 60⁽³⁾ |
| Ultrafine™ oil | 60 |
| diesel oil | 80⁽³⁾ |

| | |
|---|---|
| note (3): phytotoxic to tomatoes | |

All of the oils plus SDS samples showed improved the control of epinasty over the comparable sample in Example 1 (140 ppb 1-MCP with no adjuvants, which had 15% control of epinasty).

### Example 6: Various Adjuvants at 70 ppb 1-MCP:

Formulations were made as described in the procedure for the tomato epinasty test shown herein above, but with various adjuvants, using the amount of 1-MCP α-CD complex necessary to achieve 70 ppb concentration of 1-MCP. Results were as follows. Percentages shown are by weight, based on the total weight of the composition.

| **Surfactant (%)** | **Alcohol (%)** | **Oil (%)** | **% Control of Epinasty** |
|---|---|---|---|
| SDS (1) | isopropanol (2) | Ultrafine™ oil (1) | 10 |
| SDS (2) | isopropanol (2) | Ultrafine™ oil (1) | 40 |
| SDS (3) | isopropanol (2) | Ultrafine™ oil (1) | 60 |
| DOSS (0.025) | isopropanol (2) | none | 20 |
| DOSS (0.05) | isopropanol (2) | none | 60 |
| DOSS (0.1) | isopropanol (2) | none | 60 |
| DOSS (0.2) | isopropanol (2) | none | 60 |
| DOSS (0.025) | none | Ultrafine™ oil (1) | 20 |
| DOSS (0.05) | none | Ultrafine™ oil (1) | 60 |
| DOSS (0.1) | none | Ultrafine™ oil (1) | 60 |
| DOSS (0.2) | none | Ultrafine™ oil (1) | 60 |
| DOSS (0.025) | isopropanol (2) | Ultrafine™ oil (1) | 40 |
| DOSS (0.05) | isopropanol (2) | Ultrafine™ oil (1) | 80 |
| DOSS (0.1) | isopropanol (2) | Ultrafine™ oil (1) | 80 |
| DOSS (0.2) | isopropanol (2) | Ultrafine™ oil (1) | 100 |

All of the compositions showed improved control of epinasty over the comparative example at 70 ppb 1-MCP with no adjuvants (10% control, from Example 1).

## Claims

1. A composition comprising
(a) one or more molecular encapsulation agents within each of which is encapsulated one or more cyclopropenes of the formula 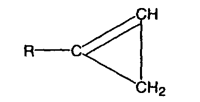 wherein said R is hydrogen or a substituted or unsubstituted alkyl, alkenyl, alkynyl, cycloalkyl, cycloalkylalkyl, phenyl, or naphthyl group; wherein the substituents, when present, are independently halogen, alkoxy, or substituted or unsubstituted phenoxy; and
(b) one or more adjuvants selected from the group consisting of surfactants, alcohols, hydrocarbon oils, and mixtures thereof.

2. The composition of claim 1, wherein said R is (C₁-C₈)alkyl.

3. The composition of claim 1, wherein said one or more molecular encapsulation agents comprises a cyclodextrin or a mixture of cyclodextrins.

4. The composition of claim 1, wherein said one or more adjuvants comprises at least one alkyl alcohol.

5. The composition of claim 1, wherein said one or more adjuvants comprises at least one hydrocarbon oil.

6. The composition of claim 1, wherein said one or more adjuvants comprises at least one surfactant.

7. The composition of claim 6, wherein said one or more adjuvants further comprises at least one alkyl alcohol; or at least one hydrocarbon oil; or both of at least one alkyl alcohol and at least one hydrocarbon oil.

8. The composition of claim 1, wherein said composition further comprises water.

9. The composition of claim 1, wherein said composition further comprises one or more metal-complexing agents.

10. A method comprising the step of contacting the composition of claim 1 with one or more plants or plant parts.
